# EUROPEAN PATENT APPLICATION

(11) **EP 4 787 717 A1**
(43) Date of publication of application: **05.08.2026**
(21) Application number: 25154977.0
(22) Date of filing: 30.01.2025
(51) Int. Cl.: H04B 5/79

(54) **AN INTEGRATED CIRCUIT**

(71) Applicant: NXP B.V., 5656 AG Eindhoven (NL)
(72) Inventor: HASLINGER, Dorian, 5656 AG Eindhoven (NL); LIEBISCH, Gregor, 5656 AG Eindhoven (NL)
(74) Representative: Krott, Michel

(57) **Abstract**

An integrated circuit for a wireless charging device, the integrated circuit configured to: communicate with a receiver device using near field communication, NFC; determine one or more processing response times of the receiver device based on the communication; and determine if the receiver device comprises a passive NFC tag or a powered NFC device based on the one or more processing response times.

## Description

### Field

The present disclosure relates to an integrated circuit for a wireless charging device and a method for characterising a NFC receiver device.

### Summary

According to a first aspect of the present disclosure there is provided an integrated circuit for a wireless charging device, the integrated circuit configured to:
communicate with a receiver device using near field communication, NFC;
determine one or more processing response times of the receiver device based on the communication; and
determine if the receiver device comprises a passive NFC tag or a powered NFC device based on the one or more processing response times.

In one or more embodiments, the integrated circuit may be configured to: communicate with the receiver device by: transmitting one or more NFC processing commands to the receiver device; and receiving one or more respective NFC processing responses from the receiver device. The integrated circuit may be configured to determine the one or more processing response times of the receiver device based on a delay between each of the one or more NFC processing commands and the respective NFC processing response.

In one or more embodiments, the integrated circuit may communicate with the receiver device using a NFC communication antenna of the wireless charging device. The integrated circuit may transmit the one or more processing commands and receive the one or more processing responses using the NFC communication antenna of the wireless charging device.

In one or more embodiments, the integrated circuit may be configured to determine that the receiver device comprises a passive NFC tag if at least one of the one or more processing response times is less than a processing response time threshold.

In one or more embodiments, the integrated circuit may be configured to determine that the receiver device comprises a MIFARE DESFire smart card device if the at least one processing response time is less than the processing response time threshold.

In one or more embodiments, the integrated circuit may be configured to:
communicate with the receiver device using NFC at a first transmission power of the wireless charging device;
determine a first processing response time of the receiver device based on the communication at the first transmission power;
communicate with the receiver device using NFC at a second transmission power of the wireless charging device, wherein the second transmission power is different to the first transmission power;
determine a second processing response time of the receiver device based on the communication at the second transmission power; and
determine if the receiver device comprises a passive NFC tag or a powered NFC device based on a difference between the first processing response time and the second processing response time.

In one or more embodiments, the integrated circuit may be configured to: determine the receiver device comprises a powered NFC device if the difference between the first processing response time and the second processing response time satisfies a difference threshold. The integrated circuit may be configured to determine the receiver device comprises a passive NFC tag if the difference between the first processing response time and the second processing response time does not satisfy the difference threshold

In one or more embodiments, the integrated circuit may be configured to determine the first processing response time and the second processing response time by measuring a frame delay time of the NFC communication.

In one or more embodiments, the integrated circuit may be configured to:
transmit a first processing command at a first transmission power;
receive a first processing response from the receiver device, wherein the first processing response corresponds to the first processing command;
determine a first processing response time of the receiver device based on the first processing response;
transmit a second processing command at a second transmission power, wherein the second processing command is the same as the first processing command and the second transmission power is different to the first transmission power;
receive a second processing response from the receiver device, wherein the second processing response corresponds to the second processing command;
determine a second processing response time of the receiver device based on the second processing response; and
determine if the receiver device comprises a passive NFC tag or a powered NFC device based on a difference between the first processing response time and the second processing response time.

In one or more embodiments, the one or more processing response times may comprise a frame delay time of the NFC communication.

In one or more embodiments, the one or more processing response times may comprise one or more of:
a Request for Answer To Select, RATS, frame delay time; or
an Application Protocol Data Unit, APDU, frame delay time.

In one or more embodiments, the integrated circuit may be configured to:
determine a plurality of processing response times by measuring:
   a RATS frame delay time at a first transmission power and at a second transmission power;
   a ADPU frame delay time at the first transmission power and at the second transmission power;
determine that the receiver device comprises a powered NFC device if a difference between the RATS frame delay time at the first transmission power and at the second transmission power satisfies a RATS difference threshold or a difference between the ADPU frame delay time at the first transmission power and at the second transmission power satisfies an APDU difference threshold; and
determine that the receiver device is a passive NFC tag if:
   the difference between the RATS frame delay time at the first transmission power and at the second transmission power does not satisfy the RATS difference threshold; or
   the difference between the ADPU frame delay time at the first transmission power and at the second transmission power does not satisfy the APDU difference threshold.

In one or more embodiments, the integrated circuit may be configured to:
output an alert signal if the receiver device comprises a passive NFC tag; or
transmit a charging signal to the receiver device for charging a battery of the receiver device if the receiver device comprises a powered NFC device.

In one or more embodiments, the integrated circuit may transmit the charging signal via a wireless charging antenna of the wireless charging device. The wireless charging antenna may comprise a Qi charging antenna or a near-field communication charging antenna.

In one or more embodiments, the integrated circuit may be configured to:
communicate with a plurality of receiver devices using NFC;
determine one or more processing response times of each of the plurality of receiver devices based on the respective communication;
determine if any of the plurality of receiver devices comprises a passive NFC tag based on the respective one or more processing response times; and
output an alert signal is any of the plurality of receiver devices comprise a passive NFC tag.

In one or more embodiments, the integrated circuit may be configured to:
communicate with the plurality of receiver devices by:
   transmitting or broadcasting one or more NFC processing commands to the plurality of receiver devices; and receiving one or more respective NFC processing responses from each of the plurality of receiver devices; and
determine the one or more processing response times of each of the plurality of receiver devices based on a delay between each of the one or more NFC processing commands and the respective NFC processing response.

In one or more embodiments, the integrated circuit may be configured to:
communicate with the plurality of receiver devices at a first transmission power and at a second transmission power; and
determine if any of the plurality of receiver devices comprises a passive NFC tag if a difference between a frame delay time of the receiver device at the first transmission power and at the second transmission power is greater than a difference threshold.

According to a second aspect of the present disclosure there is provided a wireless charging device comprising any of the integrated circuits disclosed herein.

In one or more embodiments, the wireless charging device may comprise:
a NFC communication antenna for communicating with the receiver device; and
a charging module comprising a wireless charging antenna for charging a battery of the receiver device.

According to a third aspect of the present disclosure there is provided a method for characterising a near field communication, NFC, receiver device, the method comprising:
communicating with the receiver device using near field communication, NFC;
determining one or more processing response times of the receiver device based on the communication; and
determining if the receiver device comprises a passive NFC tag or a powered NFC device based on the one or more processing response times.

In one or more embodiments, communicating with the receiver device may comprise: transmitting one or more NFC processing commands to the receiver device; and receiving one or more respective NFC processing responses from the receiver device. In one or more embodiments, determining the one or more processing response times may be based a delay between each of the one or more NFC processing commands and the respective NFC processing response.

In one or more embodiments, the method may comprise:
communicating with the receiver device using NFC at a first transmission power;
determining a first processing response time of the receiver device based on the communication at the first transmission power;
communicating with the receiver device using NFC at a second transmission power different to the first transmission power;
determining a second processing response time of the receiver device based on the communication at the second transmission power; and
determining if the receiver device comprises a passive NFC tag or a powered NFC device based on a difference between the first processing response time and the second processing response time.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a wireless charging device communicating with a receiver device;
Figure 2 illustrates another example embodiment of a wireless charging device with a smart card positioned between the wireless charging device and the receiver device;
Figure 3 illustrates a method for characterising a NFC receiver device according to an embodiment of the present disclosure; and
Figure 4 illustrates another method for characterising a NFC receiver device according to an embodiment of the present disclosure.

### Detailed Description

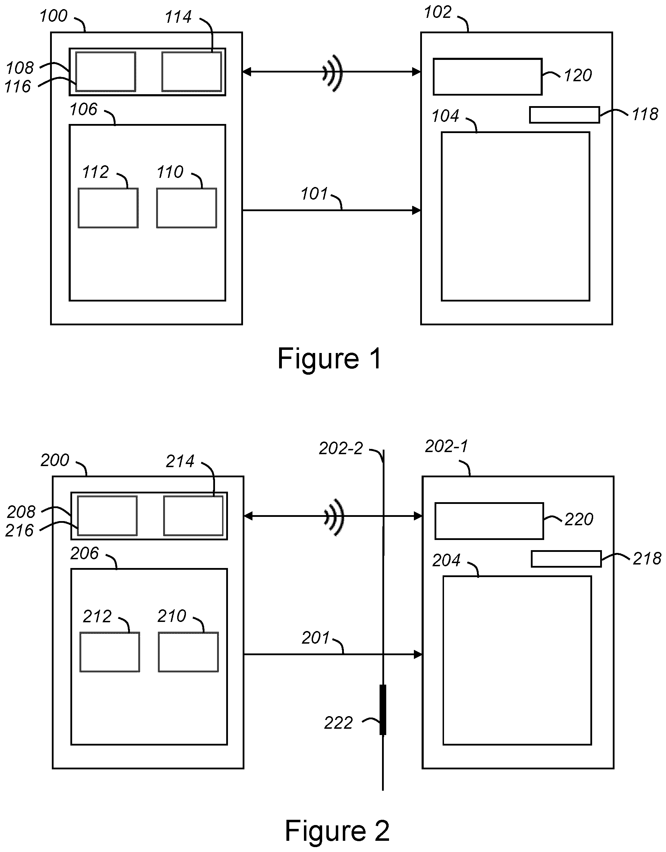

Referring to Figure 1, wireless charging such as Qi devices used in Automotive environments typically involves a wireless charging device 100 (also referred to as a wireless charging poller, a wireless charging transmitter, or a wireless charging dock) that transmits an RF charging signal 101 to a receiver device 102 (listener) for charging a battery 104 of the receiver device 102.

In this example, the wireless charging poller 100 includes a power transfer module 106 for power transfer, e.g. according to the QI standard at RF frequencies of 105 to 205 kHz. In some examples, the power transfer module 106 may communicate directly with the receiver device 102, e.g. establish a communication handshake prior to charging. In this example, the poller 100 also includes a separate near-field communication (NFC) module 108 for NFC communication with the receiver device 102. A separate NFC communication module can be used for smart card detection (see below) together with other functionality such as a CCC (car connectivity consortium) digital key. The power transfer module 106 includes a power transfer antenna 110 and a power transfer processing circuit 112. The power transfer antenna 110 can transmit an RF charging signal 101 to the battery 104 of the receiver 102. The NFC communication module 108 comprises an NFC communication antenna 114 and a communication processing circuit 116. In other examples, communication and power transfer functionality may be performed with the same antenna, for example in NFC wireless chargers. In some examples, two or more of the processing circuits and antenna(s) may form part of the same integrated circuit.

In this example, the receiver device 102 is a smart phone with an NFC communication antenna 118 positioned at a specific region of the receiver device 102. As the NFC antenna 118 is a powered antenna (powered by the battery 104), the NFC antenna 118 or receiver device 102 is an example of an active NFC device, a powered NFC device or a powered NFC endpoint. In other words, a powered NFC device is a NFC device that is powered by a battery, in contrast to a passive NFC tag that is powered by an RF field of an NFC poller 100. The receiver device 102 also includes a processing device 120 and the battery 104. Two-way communication via NFC can be provided between the two NFC communication antennas 114, 118. The misalignment of the two NFC communication antennas 114, 118 represents a weak-coupling scenario.

Wireless charging devices typically perform foreign object detection to determine the presence of a foreign object between the poller 100 and the listener 102. However, the foreign object detection is typically limited to the detection of metallic objects such as coins.

Wireless charging devices 100 can also utilize their NFC communication module 106 to perform smart card detection to determine if a card with a passive NFC tag is present between the wireless charging poller and the receiver device. Example smart cards include ticketing cards, security access cards, bank cards etc. Identifying the presence of the smart card between the poller and listener can alert a user and avoid damage to the passive NFC tag of the smart card. The risk of such an unwanted damage event in Qi charging systems has increased in recent years due to the Qi standard moving from 5W to 15W+ charging power. Current smart card detection methods are limited to strong-coupling scenarios where the NFC communication antenna 110 of the wireless poller 100 and the passive NFC tag are well aligned.

Weak NFC coupling scenarios are becoming more common for in-car wireless phone charging. This is due to the relatively large area where the phone can be placed on the charging dock and charged in contrast to the small area available on top of a wireless charging module for the NFC Antenna. This in combination with the trend of having a small NFC antenna on top of big phones, instead of a bigger antenna in the middle of the phones, is leading to weak-coupling scenarios that create a challenging environment for existing smart card protection methods.

A further complication is that phones can operate in a smart card emulation mode in which they mimic the response of the passive NFC tag of a smart card to provide the same functionality and digital properties from the phone instead of the smart card. This is especially common for ticketing applications, where the smart card emulation on a phone must be identical to a real physical card to avoid IoP (interoperability) issues in the field. Therefore, relying on the functionality of the smart card as in conventional smart card detection can lead to false positives when a smart phone is operating in a smart card emulation mode.

The present disclosure provides apparatus and methods enabling passive NFC tag / smart card detection in both strong- and weak-coupling scenarios.

Figure 2 illustrates a wireless charging device 200 according to an embodiment of the present disclosure. Features of Figure 2 that are also present in Figure 1 have been given corresponding numbers in the 200 series and are not necessarily described again here.

In this example, a second receiver device 202-2 in the form of a smart card with a NFC tag 222 has been placed between the wireless charging device 200 and the phone 202-1 (a first receiver device). If the wireless charging device 200 performs only an initial hand-shake with the phone 202-1 (e.g. via the NFC antennas 214, 218) and proceeds to charge the phone battery 204, the RF charging signal 201 may damage the NFC tag 222 of the smart card 202-2.

In one or more examples, the wireless charging device can communicate with the second receiver 202-2 (and optionally both receivers 202-1, 202-2) to identify the presence of the smart card 202-1.

The wireless charging device 200 includes an integrated circuit. The integrated circuit is not illustrated but may comprise one or more of: the NFC communication module 208, the communication processing circuit 216, the NFC communication antenna 214, the power transfer module 206, the power transfer processing circuit 212, or the power transfer antenna 210. As noted for Figure 1, the wireless charging device may comprise a separate power transfer module 206 and NFC communication module 208 (e.g. for Qi charging and NFC communication) or may comprise a single communication and charging module performed using the same antenna (e.g. for NFC charging systems).

The integrated circuit may perform the following operation for one or both of the receiver devices 202-1, 202-2.

The integrated circuit communicates with the receiver device using NFC. For example the integrated circuit may transmit or broadcast (to communicate with both devices) an NFC processing command to the receiver device 202-1, 202-2, and receive a corresponding NFC processing response from the receiver device 202-1, 202-2. The integrated circuit determines or measures a processing response time of the receiver device based on a delay between the NFC processing command and the corresponding NFC processing response, and determines if the receiver device 202-1, 202-2 comprises a passive NFC tag or a powered NFC device / antenna based on the processing response time.

The integrated circuit can transmit the processing command and receive the NFC processing response via the NFC communication antenna 214.

The processing response time may comprise a frame delay time (FDT). The integrated circuit may measure the FDT as a difference between a first time at which the last bit of the NFC processing command is transmitted and a second time at which a first bit of the NFC processing response is received.

In some examples: the processing command may comprise a Request for Answer to Select (RATS) command; the processing response may comprise an Answer to Select (ATS) response; and the processing response time may comprise a RATS FDT. A RATS command is a standard NFC command to initiate communication between the poller 200 and the receiver 202-1, 202-2 or tag 222. For a RATS command, the receiver 202-1, 202-2 will respond with an Answer to Select (ATS) response. The ATS response can include important information about the NFC tag 222 / receiver 202-1, 202-2, such as its maximum frame size, supported data rates, and other communication parameters.

In some examples: the processing command may comprise an Application Protocol Data Unit (APDU) command; the processing response may comprise an APDU response; and the processing response time may comprise a APDU FDT. An APDU command is a standard NFC command sent by the poller 200 to the receiver 202-1, 202-2 or tag 222 to request a specific action.

In some examples, the integrated circuit may determine the receiver 202-2 to be a passive NFC tag 222, e.g. from a smart card device 202-2, if the processing response time is less than a processing response time threshold. Smart phones typically have a lower limit for a RATS FDT (see table 1 below) of approximately 400 us. Passive NFC tags can result in RATS FDTs of less than 400 us. In particular, a MIFARE DESFire NFC tag / device can have a RATS FDT of less than 100 us. MIFARE DESFire NFC tags are typically used for ticketing and access and have a very fast processing time compared to complex Smart Cards running a MIFARE emulation on top of an operating system or mobile phone NFC modules. Therefore, the MIFARE DESFire NFC tags can return a RATS FDT of less than 100 us (see table 1) which cannot be matched by a phone running in a smart card emulation mode. Therefore, the processing response time threshold may be 400 us, 300us, 200us, 100us or similar, for a RATS FDT (RATS processing command and ATS processing response).

However, relying on a single measurement and threshold may lead to error. While a RATS FDT less than the threshold may indicate the presence of a passive NFC tag, a RATS FDT greater than the threshold does not necessarily imply the absence of a passive NFC tag. This is because the processing response time of passive NFC tags will vary as a function of the poller transmission voltage (VDDPA). Therefore, a longer RATS FDT may be indicative of a smart card in a weak-coupling scenario rather than the absence of a smart card. The variation in FDT arises because a smart card / passive NFC tag is powered by the operating field of the poller device and the passive NFC tag typically reduces its clock speed by clock stop or clock scaling features at low field strength / power. In contrast, a battery powered NFC device does not rely on the strength of the RF field, and the same processing response time is observed for low and high field strength / power. As explained below, this difference between passive NFC tags and powered NFC devices enables a more refined approach for smart card detection.

In some examples, the wireless charging device 200 may measure a processing response time at two different transmission powers and determine if the receiver device 202-1, 202-2 comprises a passive NFC tag 222 or a powered NFC antenna 218 based on the processing response time at each of the two different transmission powers. In particular, the wireless charging 200 device may determine the receiver device 202-1, 202-2 comprises a passive NFC tag if a difference between the processing response time at the two different transmission powers is greater than a difference threshold. Similarly, the wireless charging 200 device may determine the receiver device 202-1, 202-2 comprises a powered NFC antenna / device if a difference between the processing response time at the two different transmission powers is less than or equal to the difference threshold.

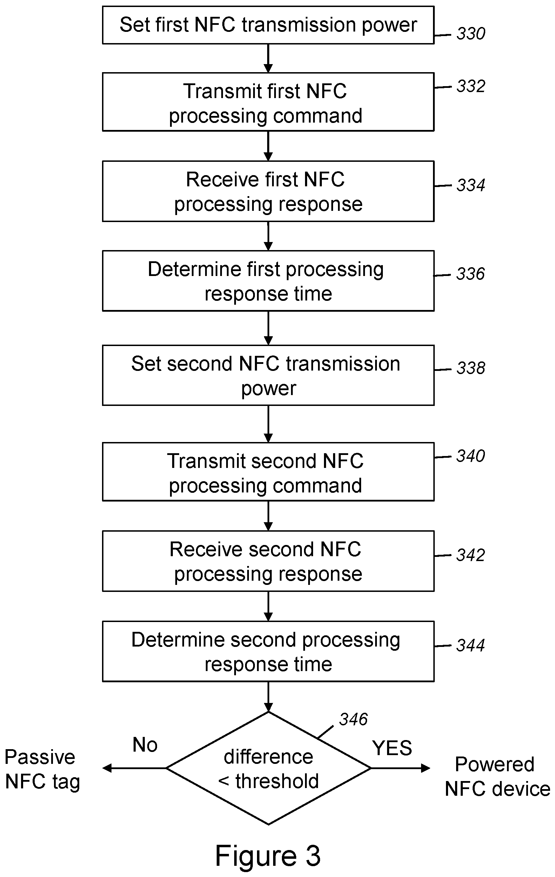

In more detail, Figure 3 illustrates a process for detecting a passive NFC tag according to an embodiment of the present disclosure. The method may be performed by the wireless charging device of Figure 1 or Figure 2 or any of the integrated circuits disclosed herein.

A first step 330 comprises setting a NFC transmission power (VDDPA) of a wireless charging device to a first transmission power.

A second step 332 comprises transmitting a first NFC processing command at the first transmission power.

A third step 334 comprises receiving a first NFC processing response corresponding to the first processing command from a receiver device. The combination of the second step 332 and the third step 334 may be referred to as a single step comprising communicating with the receiver device using NFC communication.

A fourth step 336 comprises determining a first processing response time of the receiver device based on a delay between the first NFC processing command and the first NFC processing response. The processing response time may comprise a FDT as described above.

A fifth step 338 comprises setting the NFC transmission power of the wireless charging device to a second transmission power.

A sixth step 340 comprises transmitting a second NFC processing command at the second transmission power.

A seventh step 342 comprises receiving a NFC second processing response corresponding to the second NFC processing command from the receiver device.

An eighth step 344 comprises determining a second processing response time of the receiver device based on a delay between the second NFC processing command and the second NFC processing response.

A ninth step 346 comprises comparing a difference between the first processing response time and the second processing response time, to a difference threshold. The ninth step 346 also comprises determining the receiver device to comprise a passive NFC tag if the difference is greater than the difference threshold and determining the receiver device to comprise a powered NFC antenna / device if the difference satisfies the difference threshold.

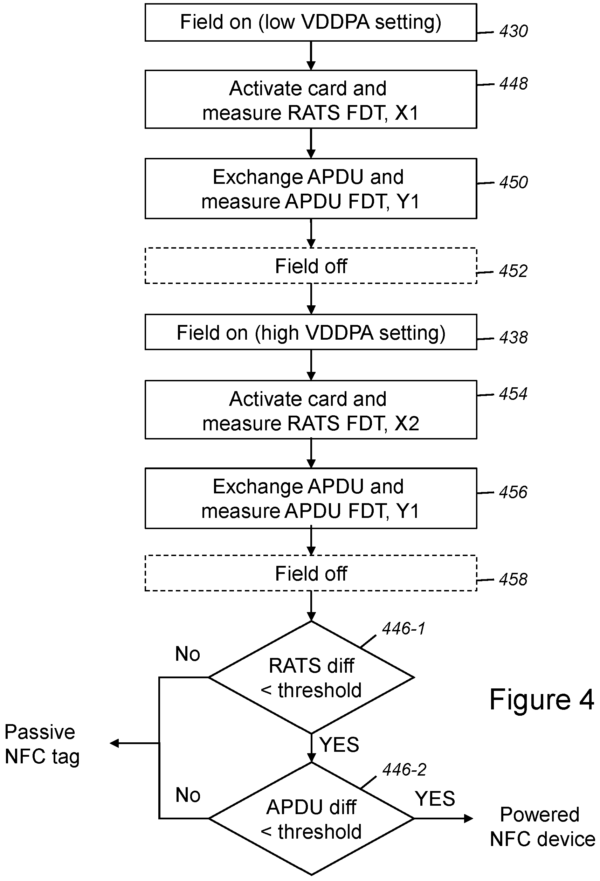

In some examples, as illustrated in Figure 4, the wireless charging device may measure processing response times for two different transmission powers and two different processing commands at each processing power. Steps of Figure 4 that appear in Figure 3 have been given corresponding numbers in the 400 series. Furthermore, the steps of transmitting the NFC processing command 332, receiving the NFC processing response 334 and determining the processing response time 336 are referred to as the step of communicating with the receiver device using NFC and determining a frame delay time.

A first step 430 comprises enabling an RF transmission field of the wireless charging device at a first transmission power (low VDDPA setting (e.g. minimum VDDPA)).

A second step 448 comprises activating a smart card / NFC tag and measuring a first RATS FDT, X1, at the first transmission power. The second step 448 comprises a specific embodiment of the second, third and fourth steps 332, 334, 336 of Figure 3. Activating the smart card may comprise the wireless charging device sending a NFC activation signal to the smart card. Measuring the first RATS FDT, X1, may comprise transmitting a RATS command at the first transmission power, receiving a ATS response and calculating the RATS FDT based on a delay between the RATS command and the ATS response.

A third step 450 comprises exchanging APDU and measuring a first ADPU FDT, Y1, at the first transmission power. The third step 450 comprises another specific embodiment of the second, third and fourth steps 332, 334, 336 of Figure 3. Measuring the first ADPU FDT, Y1, may comprise transmitting an APDU command at the first transmission power, receiving an APDU response and calculating the APDU FDT based on a delay between the APDU command and the APDU response.

An optional fourth step 452 comprises temporarily disabling the RF transmission field.

A fifth step 438 comprises enabling the RF transmission field at a second transmission power (high VDDPA setting (e.g. maximum VDDPA)).

A sixth step 454 comprises activating a smart card / passive NFC tag and measuring a second RATS FDT, X2, at the second transmission power. The sixth step 454 comprises a specific embodiment of the sixth, seventh and eighth steps 340, 342, 344 of Figure 3. Measuring the second RATS FDT, X1, may comprise transmitting a RATS command at the second transmission power, receiving a ATS response and calculating the RATS FDT based on a delay between the RATS command and the ATS response.

A seventh step 456 comprises exchanging APDU and measuring a second ADPU FDT, Y2, at the second transmission power. The seventh step 456 comprises another specific embodiment of the sixth, seventh and eighth steps 340, 342, 344 of Figure 3. Measuring the second ADPU FDT, Y1, may comprise transmitting an APDU command at the second transmission power, receiving an APDU response and calculating the APDU FDT based on a delay between the APDU command and the APDU response.

An optional eighth step 458 comprises temporarily disabling the RF transmission field.

A ninth step 446-1 comprises comparing a difference between the first RATS FDT, X1, and the second RATS FDT, X2, to a RATS difference threshold. If the difference is greater than the RATS difference threshold, the method identifies the receiver device as comprising a passive NFC tag. If the difference is less than the RATS difference threshold, the method proceed to a tenth step 446-2.

The tenth step 446-2 comprises comparing a difference between the first APDU FDT, Y1, and the second APDU FDT, Y2, to an APDU difference threshold. If the difference is greater than the APDU difference threshold, the method identifies the receiver device as comprising a passive NFC tag. If the difference is less than the APDU difference threshold, the method identifies the receiver device as comprising a powered NFC antenna / device.

Table 1 illustrates results from a variety of NFC receiver devices including a number of smart phones and a number of smart cards with passive NFC tags. The method of Figure 4 was used to obtain the measurements and provide the conclusion in the final column. Measurements were performed at the edge of the NFC antenna of the wireless charging poller to simulate weak-coupling scenarios, for which conventional smart card detection techniques struggle. The results indicate that the method of Figure 4 correctly identifies each device as a phone (powered NFC device) or a smart card (passive NFC tag).

Returning to Figure 2, in some examples, the integrated circuit may communicate with a plurality of receiver devices 202-1, 202-2. For example, the integrate circuit may broadcast a NFC processing command to both the first and second receiver devices 202-1, 202-2. The integrated circuit may receive a corresponding processing response from each of the receiver devices 202-1, 202-2. The integrated circuit may determine whether each of the receiver devices 202-1, 202-2 comprise a passive NFC tag or a powered NFC antenna /device using any of the techniques or processes described above for a single receiver device. For example, the integrated circuit may broadcast a NFC processing command to both receiver devices 202-1, 202-1 at a first transmission power, receive a NFC processing response from each receiver device 202-1, 202-2 and determine a first processing response time for each receiver device 202-1, 202-2. The integrated circuit may broadcast the same NFC processing command to both receiver devices 202-1, 202-2, at a second transmission power, receive a NFC processing response from each receiver device 202-1, 202-2 and determine a second processing response time for each receiver device 202-1, 202-2. The integrated circuit may determine one or both of the receiver devices 202-1, 202-2 to comprise a passive NFC tag if the difference between the respective first processing response time and second processing response time is greater than a difference threshold (and determine a powered NFC device if the difference is less than or equal to the difference threshold).

**Table 1: Results of RATS and ADPU FDT measurements and corresponding NFC device characterization**

| **NFC device** | **FDT 1.5V RATS** | **FDT 4.7V RATS** | **FDT diff RATS** | **FDT 1.5V APDU** | **FDT 4.7V APDU** | **FDT diff APDU** | **Conclusion** |
|---|---|---|---|---|---|---|---|
| Samsung Galaxy S22+ | 416 | 416 | 0 | 4928 | 4852 | 76 | Phone |
| Xiaomi 11T Pro | 473 | 473 | 0 | 596 | 605 | -9 | Phone |
| Galaxy Note 20 Ultra | 473 | 473 | 0 | 5202 | 5174 | 28 | Phone |
| Honor Magic 4 Pro | 482 | 492 | -10 | 756 | 746 | 10 | Phone |
| Citi bank card | 416 | 246 | 170 | 13235 | 3341 | 9894 | Card |
| Austrian e-card | 699 | 227 | 472 | 56425 | 10414 | 46011 | Card |
| Edenred bank card | 492 | 189 | 303 | 20881 | 8270 | 12611 | Card |
| MIFARE DESFire EV3 | 86 | 86 | 0 | 7632 | 3606 | 4026 | Card |
| MIFARE DESFire EV2 | 605 | 274 | 331 | 14569 | 4759 | 9810 | Card |

The disclosed apparatus and methods provide for passive NFC tags / smart card detection for wireless charging devices in both strong- and weak-coupling scenarios. The disclosed apparatus and methods can measure processing response times, such as frame delay times to characterize a NFC receiver as a passive NFC tag or a powered NFC device. By performing a FDT measurement at two different powers, the NFC charging device can accurately identify a passive or powered NFC device based on any difference in the FDT at the two different powers.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An integrated circuit for a wireless charging device, the integrated circuit configured to:
communicate with a receiver device using near field communication, NFC;
determine one or more processing response times of the receiver device based on the communication; and
determine if the receiver device comprises a passive NFC tag or a powered NFC device based on the one or more processing response times.

2. The integrated circuit of claim 1, wherein the integrated circuit is configured to:
communicate with the receiver device by:
transmitting one or more NFC processing commands to the receiver device; and
receiving one or more respective NFC processing responses from the receiver device; and
determine the one or more processing response times of the receiver device based on a delay between each of the one or more NFC processing commands and the respective NFC processing response.

3. The integrated circuit of claim 1 or claim 2, wherein the integrated circuit is configured to determine that the receiver device comprises a passive NFC tag if at least one of the one or more processing response times is less than a processing response time threshold.

4. The integrated circuit of claim 3, wherein the integrated circuit is configured to determine that the receiver device comprises a MIFARE DESFire smart card device if the at least one processing response time is less than the processing response time threshold.

5. The integrated circuit of any preceding claim, wherein the integrated circuit is configured to:
communicate with the receiver device using NFC at a first transmission power of the wireless charging device;
determine a first processing response time of the receiver device based on the communication at the first transmission power;
communicate with the receiver device using NFC at a second transmission power of the wireless charging device, wherein the second transmission power is different to the first transmission power;
determine a second processing response time of the receiver device based on the communication at the second transmission power; and
determine if the receiver device comprises a passive NFC tag or a powered NFC device based on a difference between the first processing response time and the second processing response time.

6. The integrated circuit of claim 5, wherein the integrated circuit is configured to:
determine the receiver device comprises a powered NFC device if the difference between the first processing response time and the second processing response time satisfies a difference threshold; and
determine the receiver device comprises a passive NFC tag if the difference between the first processing response time and the second processing response time does not satisfy the difference threshold

7. The integrated circuit of any preceding claim, wherein the one or more processing response times comprise a frame delay time of the NFC communication.

8. The integrated circuit of claim 7, wherein the one or more processing response times comprise one or more of:
a Request for Answer To Select, RATS, frame delay time; or
an Application Protocol Data Unit, APDU, frame delay time.

9. The integrated circuit of claim 8, wherein the integrated circuit is configured to:
determine a plurality of processing response times by measuring:
a RATS frame delay time at a first transmission power and at a second transmission power;
a ADPU frame delay time at the first transmission power and at the second transmission power;
determine that the receiver device comprises a powered NFC device if a difference between the RATS frame delay time at the first transmission power and at the second transmission power satisfies a RATS difference threshold or a difference between the ADPU frame delay time at the first transmission power and at the second transmission power satisfies an APDU difference threshold; and
determine that the receiver device is a passive NFC tag if:
the difference between the RATS frame delay time at the first transmission power and at the second transmission power does not satisfy the RATS difference threshold; or
the difference between the ADPU frame delay time at the first transmission power and at the second transmission power does not satisfy the APDU difference threshold.

10. The integrated circuit of any preceding, wherein the integrated circuit is configured to:
output an alert signal if the receiver device comprises a passive NFC tag; or
transmit a charging signal to the receiver device for charging a battery of the receiver device if the receiver device comprises a powered NFC device.

11. The integrated circuit of any preceding claim, wherein the integrated circuit is configured to:
communicate with a plurality of receiver devices using NFC;
determine one or more processing response times of each of the plurality of receiver devices based on the respective communication;
determine if any of the plurality of receiver devices comprises a passive NFC tag based on the respective one or more processing response times; and
output an alert signal is any of the plurality of receiver devices comprise a passive NFC tag.

12. The integrated circuit of claim 11, wherein the integrated circuit is configured to:
communicate with the plurality of receiver devices at a first transmission power and at a second transmission power; and
determine if any of the plurality of receiver devices comprises a passive NFC tag if a difference between a frame delay time of the receiver device at the first transmission power and at the second transmission power is greater than a difference threshold.

13. A wireless charging device comprising the integrated circuit of any preceding claim.

14. A method for characterising a near field communication, NFC, receiver device, the method comprising:
communicating with the receiver device using near field communication, NFC;
determining one or more processing response times of the receiver device based on the communication; and
determining if the receiver device comprises a passive NFC tag or a powered NFC device based on the one or more processing response times.

15. The method of claim 14 comprising:
communicating with the receiver device using NFC at a first transmission power;
determining a first processing response time of the receiver device based on the communication at the first transmission power;
communicating with the receiver device using NFC at a second transmission power different to the first transmission power;
determining a second processing response time of the receiver device based on the communication at the second transmission power; and
determining if the receiver device comprises a passive NFC tag or a powered NFC device based on a difference between the first processing response time and the second processing response time.
